# EUROPEAN PATENT APPLICATION

(11) **EP 3 826 206 A1**
(43) Date of publication of application: **26.05.2021**
(21) Application number: 18926587.9
(22) Date of filing: 20.07.2018
(51) Int. Cl.: H04L 1/16

(54) **USER EQUIPMENT AND WIRELESS COMMUNICATION METHOD**

(71) Applicant: NTT DoCoMo, Inc., Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/027398
(87) International publication number: WO 2020/017055

(57) **Abstract**

To appropriately control transmission of a transmission acknowledgement signal even when a transmission candidate domain of a PDSCH is configured over a plurality of slots, a user terminal according to one aspect of the present disclosure includes: a reception section that receives 1 or more downlink shared channels to which candidate occasions are configured over a plurality of slots; and a control section that controls generation of the transmission acknowledgement signals for the downlink shared channels based on at least one of a candidate occasion unit, a slot unit and a downlink shared channel transmission unit.

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of a larger capacity and higher sophistication than those of LTE (LTE Rel. 8 and 9), LTE-Advanced (LTE-A and LTE Rel. 10, 11, 12 and 13) has been specified.

LTE successor systems (also referred to as, for example, Future Radio Access (FRA), the 5th generation mobile communication system (5G), 5G+ (plus), New Radio (NR), New radio access (NX), Future generation radio access (FX) or LTE Rel. 14, 15 or subsequent releases) are also studied.

In legacy LTE systems (e.g., LTE Rel. 8 to 14), a user terminal (UE: User Equipment) controls reception of a downlink shared channel (e.g., PDSCH: Physical Downlink Shared Channel) based on Downlink Control Information (also referred to as, for example, DCI or a DL assignment) conveyed via a downlink control channel (e.g., PDCCH: Physical Downlink Control Channel). Furthermore, the user terminal controls transmission of an uplink shared channel (e.g., PUSCH: Physical Uplink Shared Channel) based on the DCI (also referred to as, for example, a UL grant).

Furthermore, legacy LTE systems perform communication on Downlink (DL) and Uplink (UL) by using subframes (also referred to as, for example, Transmission Time Intervals (TTIs)) of 1 ms. The subframe is a transmission time unit of 1 channel-coded data packet, and is a processing unit of scheduling, link adaptation and retransmission control (HARQ: Hybrid Automatic Repeat reQuest).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

It is studied for a future radio communication system (e.g., NR, 5G, 5G+ or Rel. 15 or subsequent releases) to repeatedly transmit at least one of a given channel (e.g., a PDSCH or a PUSCH) and signal (channel/signal). It is thought that repeated transmission is useful for services of ultra reliability and low latency such as Ultra Reliable and Low Latency Communications (URLLC).

For example, it is thought that a base station notifies a UE of a transmission candidate domain of a PDSCH (also referred to as a candidate occasion, a PDSCH occasion or an allocation candidate domain) over a plurality of slots by using downlink control information. A configuration where the candidate occasion of the PDSCH is configured over a plurality of slots is also referred to as multi-slot PDSCH transmission. In this case, it is also assumed that the base station configures a candidate occasion of each PDSCH such that at least part of candidate occasions of different PDSCHs (e.g., different transport blocks) overlap.

Thus, when candidate occasions of 1 or more PDSCHs are configured over a plurality of slots (multiple slots), how to control transmission of a transmission acknowledgement signal (e.g., HARQ-ACK, ACK/NACK or A/N) for each PDSCH matters. When HARQ-ACK for each PDSCH is not appropriately fed back, there is also a risk that communication quality deteriorates.

It is therefore one of objects of the present disclosure to provide a user terminal and a radio communication method that can appropriately control transmission of a transmission acknowledgement signal even when a transmission candidate domain of a PDSCH is configured over a plurality of slots.

### Solution to Problem

A user terminal according to one aspect of the present disclosure includes: a reception section that receives 1 or more downlink shared channels to which candidate occasions are configured over a plurality of slots; and a control section that controls generation of transmission acknowledgement signals for the downlink shared channels based on at least one of a candidate occasion unit, a slot unit and a downlink shared channel transmission unit.

### Advantageous Effects of Invention

According to one aspect of the present disclosure, it is possible to appropriately control transmission of a transmission acknowledgement signal even when a transmission candidate domain of a PDSCH is configured over a plurality of slots.

### Brief Description of Drawings

Fig. 1 is a diagram illustrating one example of repeated transmission of a PDSCH.
Fig. 2 is a diagram illustrating one example of configuration of candidate occasions of PDSCHs.
Fig. 3 is a diagram illustrating one example of HARQ-ACK transmission according to a first aspect.
Figs. 4A to 4C are diagrams illustrating one of allocation of PDSCHs associated with different TBs according to the first aspect.
Fig. 5 is a diagram illustrating one example of HARQ-ACK transmission according to a second aspect.
Fig. 6 is a diagram illustrating one example of HARQ-ACK transmission according to a third aspect.
Fig. 7 is a diagram illustrating one example of a schematic configuration of a radio communication system according to the present embodiment.
Fig. 8 is a diagram illustrating one example of an overall configuration of a radio base station according to the present embodiment.
Fig. 9 is a diagram illustrating one example of a function configuration of the radio base station according to the present embodiment.
Fig. 10 is a diagram illustrating one example of an overall configuration of a user terminal according to the present embodiment.
Fig. 11 is a diagram illustrating one example of a function configuration of the user terminal according to the present embodiment.
Fig. 12 is a diagram illustrating one example of hardware configurations of the radio base station and the user terminal according to the present embodiment.

### Description of Embodiments

It is studied for a future radio communication system (e.g., NR, 5G, 5G+ or Rel. 15 or subsequent releases) to repeatedly transmit at least one of a channel and a signal (channel/signal). The channel/signal is, for example, a PDSCH, a PDCCH, a PUSCH, a PUCCH, a DL-RS and an Uplink Reference Signal (UL-RS), yet is not limited to these.

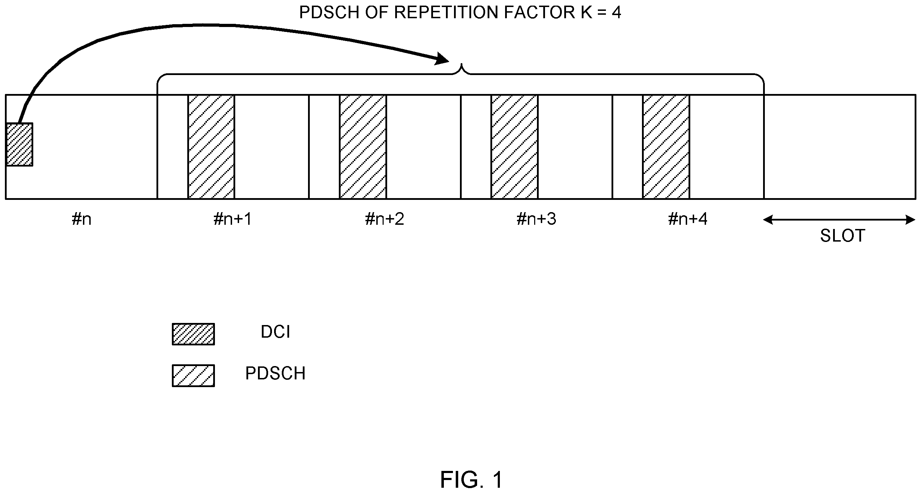

Fig. 1 is a diagram illustrating one example of repeated transmission of PDSCHs. Fig. 1 illustrates one example where a given number of repetition PDSCHs are scheduled by single DCI. The number of times of the repetition is also referred to as a repetition factor K or an aggregation factor K. For example, although repetition factor K = 4 holds in Fig. 1, a value of K is not limited to this. Furthermore, nth repetition is also referred to as, for example, an nth transmission occasion, and may be identified by a repetition index k (0 ≤ k ≤ K-1).

Thus, scheduling data (e.g., PDSCH) to be transmitted in a plurality of slots by using Downlink Control Information (e.g., one DCI) is also referred to as multi-slot scheduling, multi-slot aggregation or a multi-slot PDSCH. Multi-slot scheduling of the PDSCH may be configured such that the PDSCH is transmitted in at least one of transmission candidate domain (also referred to as candidate occasions or allocation candidate domains) configured over a plurality of slots.

For example, in Fig. 1, a user terminal receives information that indicates the repetition factor K by a higher layer signaling. In this regard, the higher layer signaling may be, for example, one or a combination of an Radio Resource Control (RRC) signaling, a Medium Access Control (MAC) signaling and broadcast information.

The MAC signaling may use, for example, an MAC Control Element (MAC CE) or an MAC Protocol Data Unit (PDU). The broadcast information may be, for example, a Master Information Block (MIB), a System Information Block (SIB) or Remaining Minimum System Information (RMSI).

When receiving DCI for scheduling a PDSCH in a given slot (e.g., a slot #n), the UE monitors the PDSCH in K slots (e.g., contiguous slots) subsequent to the given slot #n. In Fig. 1, a slot #n+1 to a slot #n+4 correspond to a candidate occasions of a certain PDSCH. There may be employed a configuration where, when the PDSCH is transmitted in a plurality of slots among the PDSCH candidate occasions including the K slots, the same PDSCH (e.g., same transport block) is transmitted.

More specifically, the UE may detect the DCI for scheduling the PDSCH to be repeatedly transmitted in a certain serving cell or in a partial band (Bandwidth Part (BWP)) in the certain serving cell. The BWP may include a BWP for Uplink (UL) (a UL BWP or an uplink BWP) and a BWP for Downlink (DL) (a DL BWP or a downlink BWP). That is, the user terminal performs communication by using the BWP for Uplink (UL) (the UL BWP or the uplink BWP) and the BWP for Downlink (DL) (the DL BWP or the downlink BWP) in the certain serving cell or in the partial band in the certain serving cell.

The UE may monitor a CORESET (one or more Search Space sets (SS sets) associated with the CORESET, or PDCCH candidates that make up the SS sets) configured in a DL BWP, and detect the DCI. The UE receives the PDSCH in at least one of the K contiguous slots after a given duration from a slot in which the DCI has been detected.

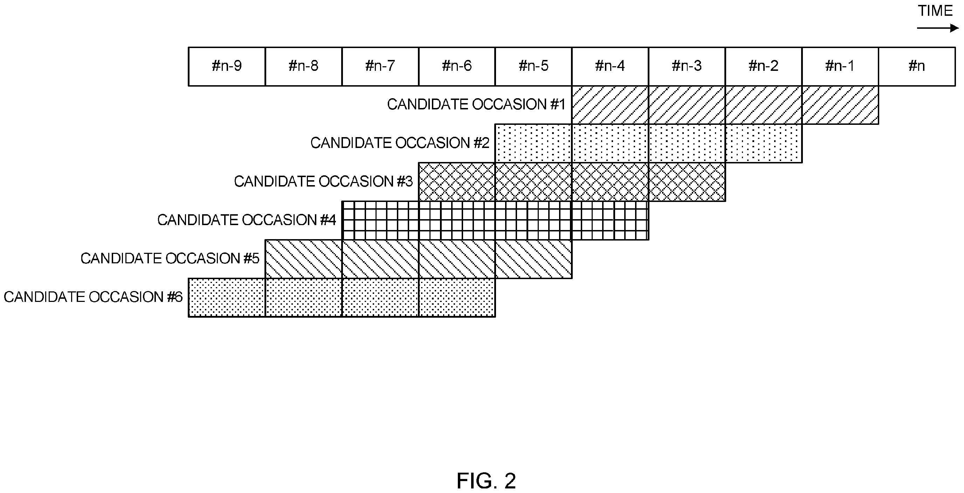

On the other hand, it is also thought that, when PDSCH candidate occasions are configured over a plurality of slots, a plurality of candidate occasions respectively associated with a plurality of PDSCHs (e.g., different TBs) are configured to overlap (see Fig. 2). In Fig. 2, a PDSCH candidate occasion #1 is configured to slots #n-4 to #n-1. In addition, the UE may recognize the PDSCH candidate occasion #1 based on DCI for instructing scheduling of the PDSCH and the repetition factor K (K = 4 in this case) notified from a base station. The DCI may be transmitted in a slot (e.g., slot #n-4) that is or before the slot #n-4.

Furthermore, in Fig. 2, a candidate occasion #2 of a PDSCH is configured to slots #n-5 to #n-2, a candidate occasion #3 is configured to slots #n-6 to #n-3, a candidate occasion #4 is configured to slots #n-7 to #n-4, a candidate occasion #5 is configured to slots #n-8 to #n-5, and a candidate occasion #6 is configured to slots #n-9 to #n-6. Similar to the candidate occasion #1, the UE may recognize the candidate occasions #2 to #6 based on DCI associated with each candidate occasion and the repetition factor K.

Alternatively, the UE may recognize all PDSCH candidate occasions that may occur based on PDCCH detection candidate resources in which DCI for instructing scheduling of a PDSCH can be transmitted, candidate allocation time resources of the PDSCH scheduled by the DCI, and the repetition factor K (K = 4 in this case) notified from the base station. When, for example, the PDCCH detection candidate resource is every slot, a candidate resource for scheduling the PDSCH is also every slot, and K = 4 holds, the PDSCH candidate occasions #1 to #6 in Fig. 2 are recognized.

There may be employed a configuration where each different PDSCH (e.g., TB) is transmitted in each of the candidate occasions #1 to #6. The UE can receive each PDSCH in at least one slot that makes up each candidate occasion.

On the other hand, when candidate occasions of PDSCHs are configured over a plurality of slots, how to control transmission of HARQ-ACKs for the PDSCHs matters. When HARQ-ACK is not appropriately fed back for each PDSCH, there is also a risk that communication quality deteriorates.

Hence, the inventors of the present invention have conceived controlling transmission of HARQ-ACK for a PDSCH focusing on a candidate occasion unit and a slot unit when the candidate occasion of the PDSCH is configured over a plurality of slots.

Furthermore, the inventors of the present invention have conceived controlling HARQ-ACK transmission based on whether or not scheduling of different PDSCHs (e.g., different TBs) (or allocation of the PDSCHs to different PDSCH candidate occasions) is applied to the same slot.

The present embodiment will be described in detail below with reference to the drawings. The following description will describe reception of a PDSCH (e.g., DL data) and HARQ-ACK for the PDSCH. However, a signal or a channel to which the present embodiment is applicable is not limited to this. Furthermore, the following description will cite and describe an example of a case (type 1) where an HARQ-ACK codebook size is semi-statically configured. However, the present embodiment is not limited to this, and may be applied to a case (type 2), too, where the HARQ-ACK codebook size is dynamically configured.

### (First Aspect)

According to the first aspect, HARQ-ACK transmission is controlled in a candidate occasion unit of a downlink shared channel (e.g., PDSCH). The following description will cite and describe an example of a case where a repetition factor K (aggregationFactorDL) is 4 such as a case where a candidate occasion of a PDSCH is configured over 4 contiguous slots. Naturally, the applicable repetition number is not limited to this, and a candidate occasion may be configured to non-contiguous slots. Furthermore, time resource allocation (e.g., PDSCH allocation symbols) in each slot of a PDSCH to be transmitted in a plurality of slots may be the same or may be different between slots.

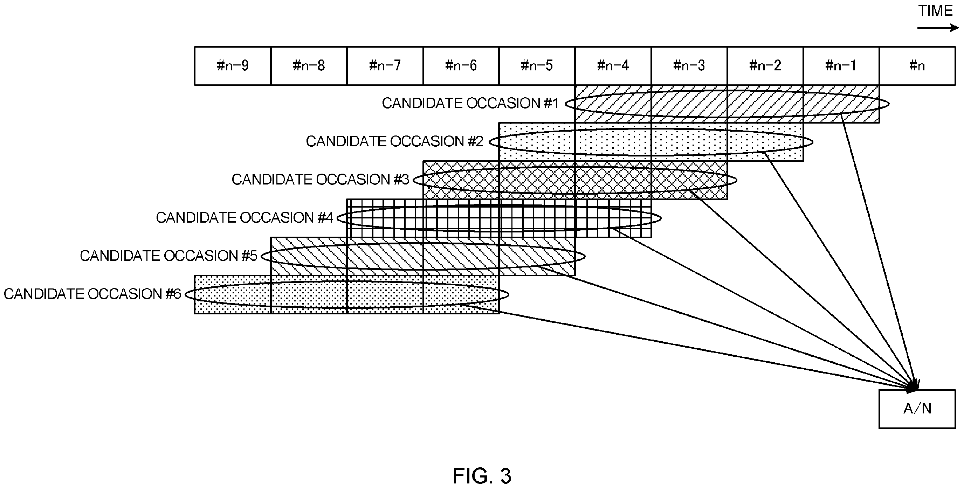

Fig. 3 illustrates one example of a case where a PDSCH over a plurality of slots (4 slots in this case) is configured, a PDCCH monitoring occasion is every slot, and a PDSCH allocation candidate time resource is a slot (i.e., a symbol #0 to a symbol #13 in the slot). In this case, the candidate occasions of the PDSCHs for transmitting different transport blocks may be configured to overlap (see Fig. 3).

In Fig. 3, PDSCH candidate occasions #1 to #6 are configured based on a value of K, a PDCCH monitoring occasion and a PDSCH allocation candidate time resource similar to above Fig. 2. The UE may recognize at least one of a position and a range to which each candidate occasion is configured based on DCI for instructing scheduling of a PDSCH and a repetition factor K (K = 4 in this case) notified from a base station.

PDSCH transmission (multi-slot PDSCH transmission) associated with the candidate occasion #1 may be scheduled by one DCI to be transmitted in a beginning slot #n-4 of the candidate occasion #1 or a slot before the beginning slot #n-4. Furthermore, there may be employed a configuration where DCI is transmitted every repeated transmission (e.g., a configuration where the DCI is transmitted in each of the slot #n-4 to a slot #n-1). The other candidate occasions #2 to #6 can be also configured likewise.

In a case where a plurality of candidate occasions overlap in a time direction, in a given range (e.g., 1 slot), there are conceived a configuration (configuration 1) where scheduling (or transmission) of a plurality of PDSCHs for transmitting different TBs is not supported, and a configuration (configuration 2) where this scheduling is supported. HARQ-ACK transmission according to the configuration 1 and the configuration 2 will be described below.

### <Configuration 1>

The configuration 1 assumes the case where scheduling (or transmission) of a plurality of PDSCHs for transmitting different TBs is not supported in the given range (e.g., 1 slot). For example, in Fig. 3, while the candidate occasions #1 to #4 are configured in the slot #n-4, the number of PDSCHs (or TBs) to be actually transmitted is limited to one or less. When a PDSCH (or a TB) associated with the candidate occasion #1 is scheduled in the slot #n-4, control may be performed such that PDSCHs are not scheduled in the candidate occasions #2 to #4 associated with other TBs.

The UE performs reception processing without assuming that a plurality of PDSCHs associated with the different TBs are transmitted (or a plurality of PDSCHs are received) in 1 slot. Even when a plurality of candidate occasions overlap in the same time domain, a network (e.g., base station) controls scheduling such that the PDSCHs associated with the different TBs do not overlap in the given range (e.g., 1 slot). Consequently, it is possible to suppress an increase in a processing load of the UE, and appropriately transmit and receive PDSCHs and transmit HARQ-ACKs for the PDSCHs.

The UE may notify the base station of UE capability information related to whether or not the PDSCHs associated with the different TBs are received (whether or not the reception is supported) in the given range (e.g., 1 slot). The base station may control scheduling of the PDSCHs based on the UE capability information from the UE. For example, for the UE to which that reception of the PDSCHs associated with the different TBs is not supported in the 1 slot has been notified, the base station only needs to control scheduling such that the PDSCHs associated with the different TBs do not overlap in the 1 slot.

Furthermore, the UE may perform at least one of generation and transmission of HARQ-ACK for each received PDSCH per candidate occasion (or in a candidate occasion unit). In Fig. 3, the UE generates HARQ-ACK for the PDSCH (e.g., the PDSCH transmitted in the slots #n-4 to #n-1) associated with the candidate occasion #1. When a plurality of PDSCHs (e.g., a plurality of identical TBs) are transmitted in the candidate occasion #1, the UE may apply soft-combining, and generate 1-bit HARQ-ACK. The UE only needs to generate the HARQ-ACK likewise for the other candidate occasions #2 to #6, too.

When an HARQ-ACK codebook size is semi-statically configured (also referred to as an HARQ-ACK codebook of a type 1), the UE may generate an HARQ-ACK bit per candidate occasion to transmit to the base station.

A transmission timing of HARQ-ACK associated with each candidate occasion may be notified to the UE by using, for example, downlink control information. For example, the base station may give notification of the transmission timing (e.g., K1) of HARQ-ACK for the PDSCH by using a given field (e.g., PDSCH-to-HARQ-timing-indicator field) of the downlink control information (e.g., DCI format 1_0 or 1_1).

The UE may control transmission of the HARQ-ACK based on information transmitted from the base station and related to the transmission timing of the HARQ-ACK. In this case, the UE may decide the transmission timing of the HARQ-ACK based on a last slot as a reference among slots included in the candidate occasion.

For example, the UE may decide a timing of the HARQ-ACK for the PDSCH received in the candidate occasion #1 (at least one of the #n-4 to the slot #n-1) based on the slot #n-1 as a reference. In one example, the UE may decide that a slot #n-1+K1 is the HARQ-ACK transmission timing of the candidate occasion #1. In this regard, K1 may be a value notified by DCI for scheduling the PDSCH, or may be a value configured by a higher layer signaling. In addition, the reference slot of the HARQ-ACK transmission timing is not limited to this, and may be, for example, a slot in which DCI is lastly received in the candidate occasion.

Furthermore, when the HARQ-ACK codebook size is semi-statically configured, HARQ-ACK transmission (e.g., codebook size) may be controlled assuming a plurality of transmission timing candidates (e.g., K1 is {1, 2, 3, 4, 5, 6, 7, 8}) of HARQ-ACK for the PDSCH. In this case, the UE may include HARQ-ACK (valid ACK/NACK) that becomes valid in the HARQ-ACK codebook to be transmitted in a slot (e.g., a last slot +K1 of the candidate occasion) indicated based on the information transmitted by DCI and related to the HARQ-ACK transmission timing, and include NACK in the HARQ-ACK codebooks to be transmitted in other slots to transmit.

For example, a case is assumed where K1 included in DCI (e.g., DCI to be transmitted in a slot #n-9) is notified as 6 in the candidate occasion #6. In this case, a slot #n (= a slot #n-6+K1) corresponds to a feedback timing of HARQ-ACK for the PDSCH of the candidate occasion #6.

Hence, the UE includes HARQ-ACK (e.g., ACK) for the PDSCH received in the candidate occasion #6 in the HARQ-ACK codebook to transmit in the slot #n. On the other hand, the UE may transmit HARQ-ACK associated with the candidate occasion #6 as NACK in another slot (a case other than K1 = 6). Alternatively, the UE may include HARQ-ACK contents for an actual PDSCH in the codebook to transmit in other slots, too, similar to the slot #n.

### <Configuration 2>

The configuration 2 assumes a case where scheduling (or transmission) of a plurality of PDSCHs for transmitting different TBs is supported in the given range (e.g., 1 slot). For example, in Fig. 3, the candidate occasions #1 to #4 are configured to the slot #n-4. However, a plurality of TBs (or unicast PDSCHs) to be actually transmitted may be scheduled. On the other hand, there may be employed a configuration where, when different TBs are transmitted in 1 slot, the different TBs do not overlap in the same symbol. That is, control is performed such that the different TBs are allocated to different symbols (non-overlapping symbols) included in the 1 slot.

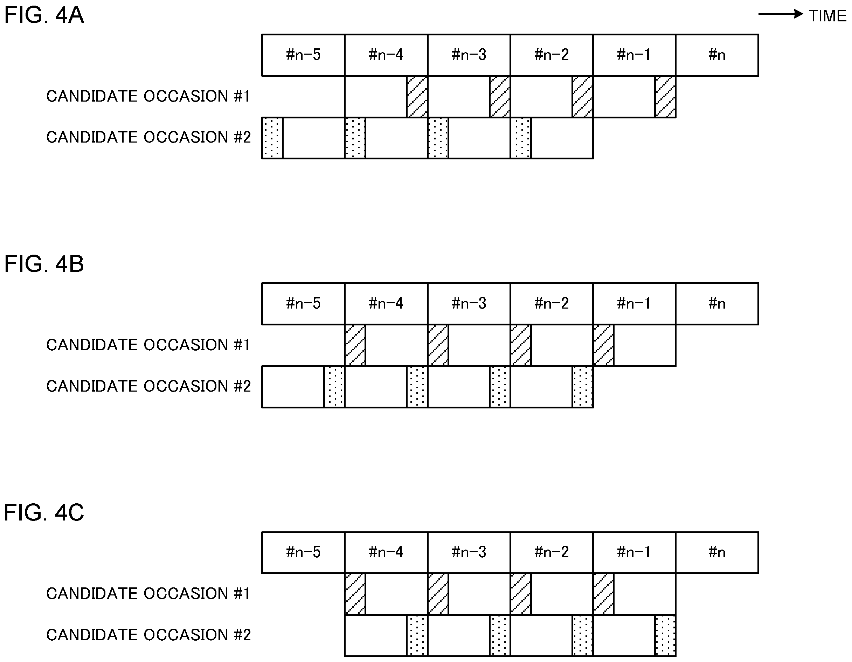

Fig. 4 illustrates one example of a case where a PDSCH (e.g., unicast PDSCH) is scheduled in each slot that makes up the candidate occasion. Fig. 4A illustrates a case where the candidate occasion #1 is configured to the contiguous slots #n-4 to #n-1, and the candidate occasion #2 is configured to the contiguous slots #n-5 to #n-2. Furthermore, each PDSCH for transmitting a TB #1 is scheduled to a second half part of each slot in the candidate occasion #1, and each PDSCH for transmitting a TB #2 is scheduled to a first half part of each slot in the candidate occasion #2.

In Fig. 4B, each PDSCH for transmitting the TB #1 is scheduled to the first half part of each slot in the candidate occasion #1, and each PDSCH for transmitting the TB #2 is scheduled to the second half part of each slot in the candidate occasion #2.

Fig. 4C illustrates a case where the candidate occasion #1 and the candidate occasion #2 are configured to the contiguous slots #n-4 to #n-1. Furthermore, each PDSCH for transmitting the TB #1 is scheduled to the first half part of each slot in the candidate occasion #1, and each PDSCH for transmitting the TB #2 is scheduled to the second half part of each slot in the candidate occasion #2.

The UE performs reception processing assuming that a plurality of PDSCHs associated with different TBs are transmitted (or a plurality of PDSCHs are received) in 1 slot. Furthermore, the UE may perform reception processing assuming that a plurality of PDSCHs associated with the different TBs are not transmitted in an overlapping symbol in 1 slot.

When a plurality of candidate occasions overlap in the same time domain, the network (e.g., base station) may perform scheduling such that PDSCHs associated with the different TBs overlap in the given range (e.g., 1 slot). On the other hand, the network may control scheduling such that a plurality of PDSCHs associated with the different TBs are not allocated to an overlapping symbol in 1 slot. Consequently, it is possible to improve resource use efficiency, and improve a communication throughput.

The UE may notify the base station of UE capability information related to whether or not the PDSCHs (e.g., unicast PDSCHs) associated with the different TBs are received in the given range (e.g., 1 slot). The base station may control scheduling of the PDSCHs based on the UE capability information from the UE. For example, for the UE to which that reception of the PDSCHs associated with the different TBs is supported in the 1 slot has been notified, the base station only needs to control scheduling by taking into account a configuration, too, where the PDSCHs associated with the different TBs overlap in the 1 slot.

Furthermore, the UE may perform at least one of generation and transmission of HARQ-ACK for each received PDSCH per candidate occasion (or in the candidate occasion unit). In Fig. 4, the UE generates HARQ-ACK for the PDSCH (e.g., the PDSCH transmitted in the slots #n-4 to #n-1) associated with the candidate occasion #1.

As illustrated in Fig. 4, when a plurality of PDSCHs (e.g., a plurality of identical TBs) are transmitted in the candidate occasion #1, the UE may apply soft-combining, and generate 1-bit HARQ-ACK. The UE only needs to generate the HARQ-ACK likewise for the other candidate occasion #2, too.

When an HARQ-ACK codebook size is semi-statically configured (also referred to as an HARQ-ACK codebook of the type 1), the UE may generate an HARQ-ACK bit per candidate occasion to transmit to the base station.

A transmission timing of HARQ-ACK associated with each candidate occasion may be notified to the UE by using, for example, downlink control information. For example, the base station may give notification of the transmission timing (e.g., K1) of HARQ-ACK for the PDSCH by using a given field (e.g., PDSCH-to-HARQ-timing-indicator field) of the downlink control information (e.g., DCI format 1_0 or 1_1).

The UE may control transmission of the HARQ-ACK based on information related to the transmission timing of the HARQ-ACK transmitted from the base station. In this case, the UE may decide the transmission timing of the HARQ-ACK based on a last slot as a reference among slots included in the candidate occasion.

For example, the UE may decide a timing of the HARQ-ACK for the PDSCH received in the candidate occasion #1 (at least one of the #n-4 to the slot #n-1) based on the slot #n-1 as a reference. In one example, the UE may decide that a slot #n-1+K1 is the HARQ-ACK transmission timing of the candidate occasion #1. In addition, the reference slot of the HARQ-ACK transmission timing is not limited to this, and may be, for example, a slot in which DCI is lastly received in the candidate occasion.

Furthermore, when the HARQ-ACK codebook size is semi-statically configured, HARQ-ACK transmission may be controlled assuming a plurality of transmission timing candidates (e.g., K1 is {1, 2, 3, 4, 5, 6, 7, 8}) of HARQ-ACK for the PDSCH. In this case, the UE may include HARQ-ACK (valid ACK/NACK) that becomes valid in the HARQ-ACK codebook to be transmitted in a slot (e.g., a last slot +K1 of the candidate occasion) indicated based on the information related to the transmission timing of HARQ-ACK transmitted by DCI, and include NACK in the HARQ-ACK codebooks to be transmitted in other slots to transmit.

For example, a case is assumed where K1 included in DCI (e.g., DCI to be transmitted in the slot #n-4) is notified as 1 in the candidate occasion #1. In this case, the slot #n (= the slot #n-1+K1) corresponds to a feedback timing of HARQ-ACK for the PDSCH of the candidate occasion #1.

Hence, the UE includes HARQ-ACK (e.g., ACK) for the PDSCH received in the candidate occasion #1 in the HARQ-ACK codebook to transmit in the slot #n. On the other hand, the UE may transmit HARQ-ACK associated with the candidate occasion #1 as NACK in another slot (a case other than K1 = 1). Alternatively, the UE may include HARQ-ACK contents for an actual PDSCH in the codebook to transmit in other slots, too, similar to the slot #n.

Thus, when the PDSCHs are repeatedly transmitted, it is possible to suppress an increase in the number of HARQ-ACK bits (codebook size) by controlling transmission processing of HARQ-ACK (e.g., generation of HARQ-ACK) per candidate occasion. Furthermore, when a plurality of PDSCHs (e.g., identical TBs) are transmitted in candidate occasions, it is possible to improve a success probability of reception of the PDSCHs or transmission of HARQ-ACKs by performing soft-combining processing.

The base station may switch between scheduling associated with the configuration 1 and scheduling associated with the configuration 2 to apply per UE based on UE capability information transmitted from each UE. Consequently, it is possible to allocate resources based on capability of each UE, so that it is possible to improve resource use efficiency.

### (Second Aspect)

According to the second aspect, HARQ-ACK transmission is controlled per repeated transmission of a downlink shared channel (e.g., PDSCH). The following description will cite and describe an example of a case where a repetition factor K (aggregationFactorDL) is 4 such as a case where a PDSCH candidate occasion is configured over 4 contiguous slots. Naturally, the applicable repetition number is not limited to this, and a candidate occasion may be configured to non-contiguous slots. Furthermore, time resource allocation (e.g., PDSCH allocation symbols) in each slot of a PDSCH to be transmitted in a plurality of slots may be the same or may be different between slots.

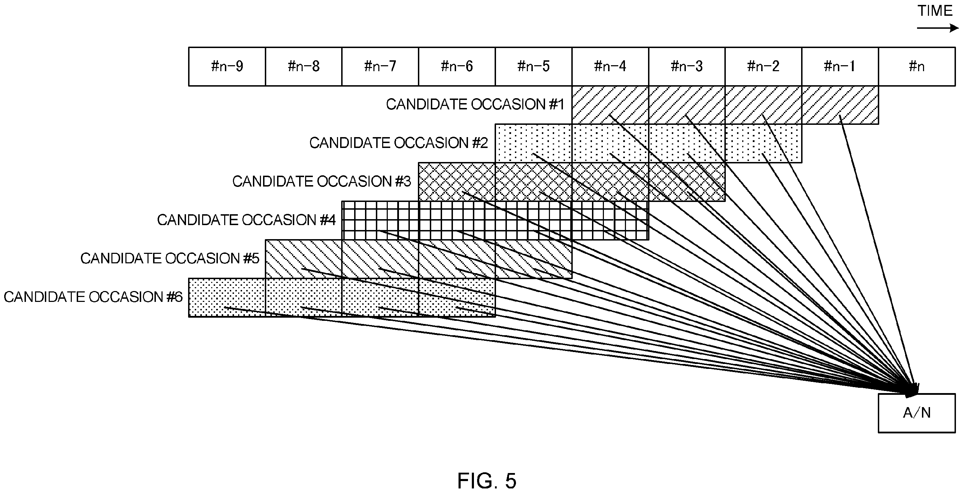

Fig. 5 illustrates one example of a case where a PDSCH candidate occasion is configured over a plurality of slots (4 slots in this case). In Fig. 5, PDSCH candidate occasions #1 to #6 are configured similar to above Fig. 2 or Fig. 3. A UE may recognize at least one of a position and a range to which each candidate occasion is configured based on DCI for instructing scheduling of a PDSCH and the repetition factor K (K = 4 in this case) notified from a base station.

The UE may perform at least one of generation and transmission of HARQ-ACK for each received PDSCH per repeated transmission (or in a repeated transmission unit). That is, when the candidate occasion includes a plurality of slots, the UE may generate HARQ-ACK per slot in which repeated transmission is performed. Thus, by transmitting HARQ-ACK per repeated transmission, it is possible to grasp a reception success or a reception failure per transmission in detail.

When an HARQ-ACK codebook size is semi-statically configured (an HARQ-ACK codebook of a type 1), the UE may generate 1-bit HARQ-ACK every four repeated transmission candidates (slots #n-4 to #n-1) associated with a candidate occasion #1. HARQ-ACK may be generated per repeated transmission likewise for candidate occasions #2 to #6, too.

A transmission timing of HARQ-ACK associated with each repeated transmission may be notified to the UE by using, for example, downlink control information. For example, a base station may give notification of the transmission timing (e.g., K1) of the HARQ-ACK for a PDSCH by using a given field (e.g., PDSCH-to-HARQ-timing-indicator field) of the downlink control information (e.g., DCI format 1_0 or 1_1).

The UE may control transmission of HARQ-ACK associated with each repeated transmission based on information related to the transmission timing of the HARQ-ACK transmitted from the base station. In addition, a case is also assumed where only one (or common) HARQ-ACK transmission timing is notified for a given candidate occasion to the UE.

In this case, the UE may decide that a feedback timing of HARQ-ACK of each repeated transmission included in the given candidate occasion is the same (e.g., a timing indicated by one DCI). In addition, when the HARQ-ACK codebook of the type 1 is applied, the UE may perform control to transmit valid HARQ-ACK associated with each repeated transmission at a timing indicated by the one DCI.

Furthermore, in a case where a plurality of candidate occasions overlap in a time direction, there are conceived a configuration (configuration 1) where scheduling (or transmission) of a plurality of PDSCHs for transmitting different TBs is not supported in a given range (e.g., 1 slot), and a configuration (configuration 2) where this scheduling is supported. The second aspect (e.g., HARQ-ACK feedback illustrated in Fig. 5) is applicable to each of the configuration 1 and the configuration 2. The configuration 1 may be applied to a UE that does not have capability to receive a plurality of PDSCHs associated with different TBs in 1 slot, and the configuration 2 may be applied to a UE that has the UE capability.

When the configuration 1 is applied, the UE performs PDSCH reception processing without assuming that a plurality of PDSCHs associated with the different TBs are received in the 1 slot, and performs HARQ-ACK transmission processing per repeated transmission. When the configuration 2 is applied, the UE performs PDSCH reception processing assuming that a plurality of PDSCHs associated with the different TBs are received in the 1 slot, and performs HARQ-ACK transmission processing per repeated transmission. In addition, according to the configuration 2, control may be performed such that a plurality of PDSCHs associated with the different TBs do not overlap in the same symbol in the 1 slot.

### (Third Aspect)

According to the third aspect, HARQ-ACK transmission is controlled per repetition resource of a downlink shared channel (e.g., PDSCH). The following description will cite and describe an example of a case where a repetition factor K (aggregationFactorDL) is 4 such as a case where a PDSCH candidate occasion is configured over 4 contiguous slots. Naturally, the applicable repetition number is not limited to this, and a candidate occasion may be configured to non-contiguous slots. Furthermore, time resource allocation (e.g., PDSCH allocation symbols) in each slot of a PDSCH to be transmitted in a plurality of slots may be the same or may be different between slots.

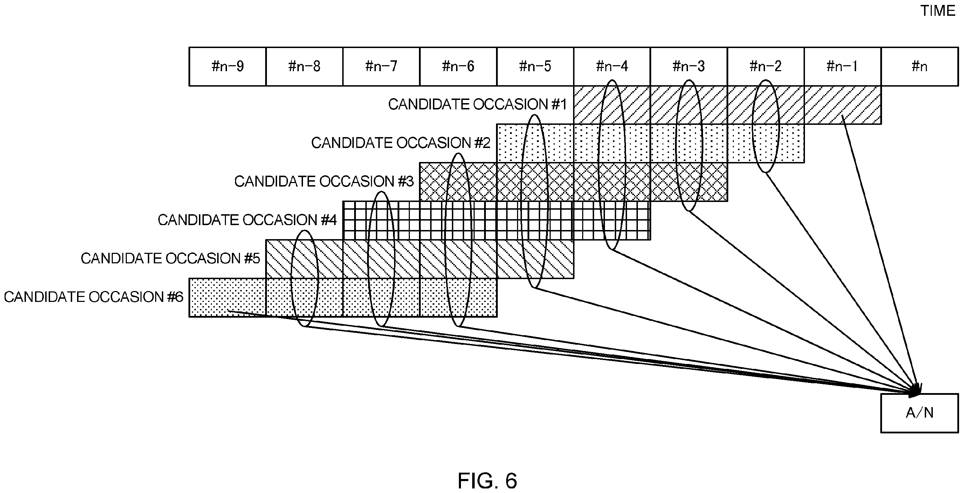

Fig. 6 illustrates one example of a case where a PDSCH candidate occasion is configured over a plurality of slots (4 slots in this case). In Fig. 6, PDSCH candidate occasions #1 to #6 are configured similar to above Fig. 2 or Fig. 3. A UE may recognize at least one of a position and a range to which each candidate occasion is configured based on DCI for instructing scheduling of a PDSCH and the repetition factor K (K = 4 in this case) notified from a base station.

The UE may perform at least one of generation and transmission of HARQ-ACK for each received PDSCH per repetition resource (or in a repetition resource unit). The repetition resource may be a given duration (e.g., slot), and transmission of HARQ-ACK may be controlled in, for example, a slot unit (see Fig. 6). In this case, HARQ-ACK only needs to be generated in a slot to which at least one multi-slot PDSCH can be configured (a slot to which at least one candidate occasion is configured).

When an HARQ-ACK codebook size is semi-statically configured (an HARQ-ACK codebook of a type 1), the UE may generate 1-bit HARQ-ACK per repetition resource (e.g., each slot). Fig. 6 illustrates a case where HARQ-ACK is separately generated per slot in a slot #n-0 to a slot #n-1. Consequently, it is possible to suppress an increase in the number of HARQ-ACK bits (codebook size).

Furthermore, in a case where a plurality of candidate occasions overlap in a time direction, there are conceived a configuration (configuration 1) where scheduling (or transmission) of a plurality of PDSCHs for transmitting different TBs is not supported in a given range (e.g., 1 slot), and a configuration (configuration 2) where this scheduling is supported. The third aspect (e.g., HARQ-ACK feedback illustrated in Fig. 6) is applicable to each of the configuration 1 and the configuration 2. The configuration 1 may be applied to a UE that does not have capability to receive a plurality of PDSCHs associated with different TBs in 1 slot, and the configuration 2 may be applied to a UE that has the UE capability.

When the configuration 1 is applied, the UE performs PDSCH reception processing without assuming that a plurality of PDSCHs associated with the different TBs are received in the 1 slot, and performs HARQ-ACK transmission processing per repeated transmission. Consequently, the number of PDSCHs (TBs) transmitted in each slot is one, so that the base station can appropriately grasp HARQ-ACK for each TB (candidate occasion) by receiving HARQ-ACK transmitted in the slot unit.

When the configuration 2 is applied, the UE performs PDSCH reception processing assuming that a plurality of PDSCHs associated with the different TBs are received in the 1 slot, and performs HARQ-ACK transmission processing per repeated transmission. In addition, according to the configuration 2, control may be performed such that a plurality of PDSCHs associated with the different TBs do not overlap in the same symbol in the 1 slot. Furthermore, a transmission control unit of HARQ-ACK may be also a unit of a given number of symbols.

### (Radio Communication System)

The configuration of the radio communication system according to the present embodiment will be described below. This radio communication system uses at least one combination of a plurality of the above aspects to perform communication.

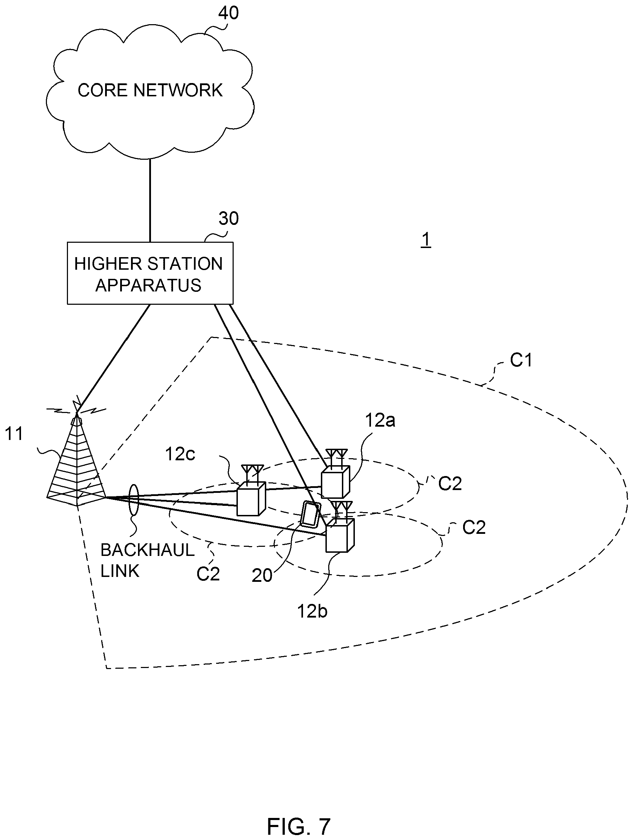

Fig. 7 is a diagram illustrating one example of a schematic configuration of the radio communication system according to the present embodiment. A radio communication system 1 can apply Carrier Aggregation (CA) and/or Dual Connectivity (DC) that aggregate a plurality of base frequency blocks (component carriers) whose 1 unit is a system bandwidth (e.g., 20 MHz) of the LTE system.

In this regard, the radio communication system 1 may be referred to as Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), New Radio (NR), Future Radio Access (FRA) and the New Radio Access Technology (New-RAT), or a system that realizes these techniques.

The radio communication system 1 includes a radio base station 11 that forms a macro cell C1 of a relatively wide coverage, and radio base stations 12 (12a to 12c) that are located in the macro cell C1 and form small cells C2 narrower than the macro cell C1. Furthermore, a user terminal 20 is located in the macro cell C1 and each small cell C2. An arrangement and the numbers of respective cells and the user terminals 20 are not limited to the aspect illustrated in Fig. 7.

The user terminal 20 can connect with both of the radio base station 11 and the radio base stations 12. The user terminal 20 is assumed to concurrently use the macro cell C1 and the small cells C2 by using CA or DC. Furthermore, the user terminal 20 can apply CA or DC by using a plurality of cells (CCs) (e.g., five CCs or less or six CCs or more).

The user terminal 20 and the radio base station 11 can communicate by using a carrier (also referred to as a legacy carrier) of a narrow bandwidth in a relatively low frequency band (e.g., 2 GHz). On the other hand, the user terminal 20 and each radio base station 12 may use a carrier of a wide bandwidth in a relatively high frequency band (e.g., 3.5 GHz or 5 GHz) or may use the same carrier as that used between the user terminal 20 and the radio base station 11. In this regard, a configuration of the frequency band used by each radio base station is not limited to this.

Furthermore, the user terminal 20 can perform communication by using Time Division Duplex (TDD) and/or Frequency Division Duplex (FDD) in each cell. Furthermore, each cell (carrier) may be applied a single numerology or may be applied a plurality of different numerologies.

The numerology may be a communication parameter to be applied to transmission and/or reception of a certain signal and/or channel, and may indicate at least one of, for example, a subcarrier spacing, a bandwidth, a symbol length, a cyclic prefix length, a subframe length, a TTI length, the number of symbols per TTI, a radio frame configuration, filtering processing and windowing processing.

The radio base station 11 and each radio base station 12 (or the two radio base stations 12) may be connected by way of wired connection (e.g., optical fibers compliant with a Common Public Radio Interface (CPRI) or an X2 interface) or radio connection.

The radio base station 11 and each radio base station 12 are each connected with a higher station apparatus 30 and connected with a core network 40 via the higher station apparatus 30. In this regard, the higher station apparatus 30 includes, for example, an access gateway apparatus, a Radio Network Controller (RNC) and a Mobility Management Entity (MME), yet is not limited to these. Furthermore, each radio base station 12 may be connected with the higher station apparatus 30 via the radio base station 11.

In this regard, the radio base station 11 is a radio base station that has a relatively wide coverage, and may be referred to as a macro base station, an aggregate node, an eNodeB (eNB) or a transmission/reception point. Furthermore, each radio base station 12 is a radio base station that has a local coverage, and may be referred to as a small base station, a micro base station, a pico base station, a femto base station, a Home eNodeB (HeNB), a Remote Radio Head (RRH) or a transmission/reception point. The radio base stations 11 and 12 will be collectively referred to as a radio base station 10 below when not distinguished.

Each user terminal 20 is a terminal that supports various communication schemes such as LTE and LTE-A, and may include not only a mobile communication terminal (mobile station) but also a fixed communication terminal (fixed station).

The radio communication system 1 applies Orthogonal Frequency-Division Multiple Access (OFDMA) to downlink and applies Single Carrier-Frequency Division Multiple Access (SC-FDMA) and/or OFDMA to uplink as radio access schemes.

OFDMA is a multicarrier transmission scheme that divides a frequency band into a plurality of narrow frequency bands (subcarriers) and maps data on each subcarrier to perform communication. SC-FDMA is a single carrier transmission scheme that divides a system bandwidth into bands including one or contiguous resource blocks per terminal and causes a plurality of terminals to use respectively different bands to reduce an inter-terminal interference. In this regard, uplink and downlink radio access schemes are not limited to a combination of these schemes, and other radio access schemes may be used.

The radio communication system 1 uses a downlink shared channel (PDSCH: Physical Downlink Shared Channel) shared by each user terminal 20, a broadcast channel (PBCH: Physical Broadcast Channel) and a downlink L1/L2 control channel as downlink channels. User data, higher layer control information and a System Information Block (SIB) are conveyed on the PDSCH. Furthermore, a Master Information Block (MIB) is conveyed on the PBCH.

The downlink L1/L2 control channel includes at least one of downlink control channels (a Physical Downlink Control Channel (PDCCH) and/or an Enhanced Physical Downlink Control Channel (EPDCCH)), a Physical Control Format Indicator Channel (PCFICH), and a Physical Hybrid-ARQ Indicator Channel (PHICH). Downlink Control Information (DCI) including scheduling information of the PDSCH and/or the PUSCH is conveyed on the PDCCH.

In addition, the scheduling information may be notified by the DCI. For example, DCI for scheduling DL data reception may be referred to as a DL assignment, and DCI for scheduling UL data transmission may be referred to as a UL grant.

The number of OFDM symbols used for the PDCCH is conveyed on the PCFICH. Transmission acknowledgement information (also referred to as, for example, retransmission control information, HARQ-ACK or ACK/NACK) of a Hybrid Automatic Repeat reQuest (HARQ) for the PUSCH is conveyed on the PHICH. The EPDCCH is subjected to frequency division multiplexing with the PDSCH (downlink shared data channel) and is used to convey DCI similar to the PDCCH.

The radio communication system 1 uses an uplink shared channel (PUSCH: Physical Uplink Shared Channel) shared by each user terminal 20, an uplink control channel (PUCCH: Physical Uplink Control Channel), and a random access channel (PRACH: Physical Random Access Channel) as uplink channels. User data and higher layer control information are conveyed on the PUSCH. Furthermore, downlink radio link quality information (CQI: Channel Quality Indicator), transmission acknowledgement information and a Scheduling Request (SR) are conveyed on the PUCCH. A random access preamble for establishing connection with a cell is conveyed on the PRACH.

The radio communication system 1 conveys a Cell-specific Reference Signal (CRS), a Channel State Information-Reference Signal (CSI-RS), a DeModulation Reference Signal (DMRS) and a Positioning Reference Signal (PRS) as downlink reference signals. Furthermore, the radio communication system 1 conveys a Sounding Reference Signal (SRS) and a DeModulation Reference Signal (DMRS) as uplink reference signals. In this regard, the DMRS may be referred to as a user terminal-specific reference signal (UE-specific reference signal). Furthermore, a reference signal to be conveyed is not limited to these.

### <Radio Base Station>

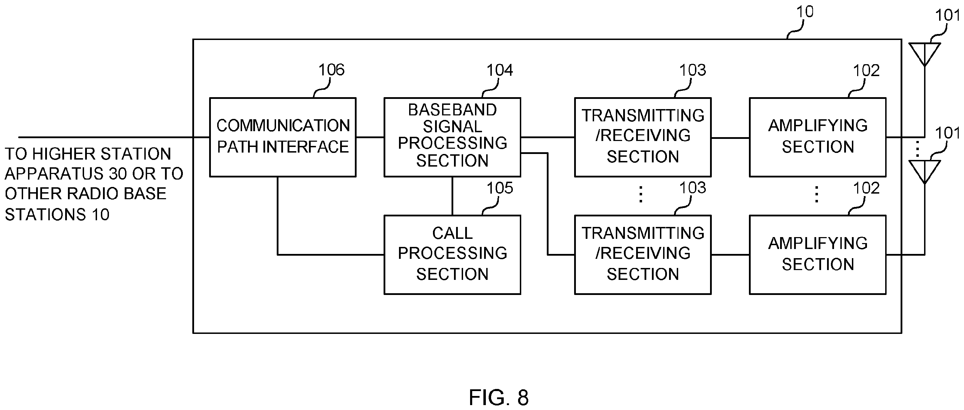

Fig. 8 is a diagram illustrating one example of an overall configuration of the radio base station according to the present embodiment. The radio base station 10 includes pluralities of transmission/reception antennas 101, amplifying sections 102 and transmitting/receiving sections 103, a baseband signal processing section 104, a call processing section 105 and a communication path interface 106. In this regard, the radio base station 10 only needs to be configured to include one or more of each of the transmission/reception antennas 101, the amplifying sections 102 and the transmitting/receiving sections 103.

User data transmitted from the radio base station 10 to the user terminal 20 on downlink is input from the higher station apparatus 30 to the baseband signal processing section 104 via the communication path interface 106.

The baseband signal processing section 104 performs processing of a Packet Data Convergence Protocol (PDCP) layer, segmentation and concatenation of the user data, transmission processing of a Radio Link Control (RLC) layer such as RLC retransmission control, Medium Access Control (MAC) retransmission control (e.g., HARQ transmission processing), and transmission processing such as scheduling, transmission format selection, channel coding, Inverse Fast Fourier Transform (IFFT) processing, and precoding processing on the user data, and transfers the user data to each transmitting/receiving section 103. Furthermore, the baseband signal processing section 104 performs transmission processing such as channel coding and inverse fast Fourier transform on a downlink control signal, too, and transfers the downlink control signal to each transmitting/receiving section 103.

Each transmitting/receiving section 103 converts a baseband signal precoded and output per antenna from the baseband signal processing section 104 into a radio frequency range, and transmits a radio frequency signal. The radio frequency signal subjected to frequency conversion by each transmitting/receiving section 103 is amplified by each amplifying section 102, and is transmitted from each transmission/reception antenna 101. The transmitting/receiving sections 103 can be composed of transmitters/receivers, transmission/reception circuits or transmission/reception apparatuses described based on a common knowledge in a technical field according to the present disclosure. In this regard, the transmitting/receiving sections 103 may be composed as an integrated transmission/reception section or may be composed of transmission sections and reception sections.

Meanwhile, each amplifying section 102 amplifies a radio frequency signal received by each transmission/reception antenna 101 as an uplink signal. Each transmitting/receiving section 103 receives the uplink signal amplified by each amplifying section 102. Each transmitting/receiving section 103 performs frequency conversion on the received signal into a baseband signal, and outputs the baseband signal to the baseband signal processing section 104.

The baseband signal processing section 104 performs Fast Fourier Transform (FFT) processing, Inverse Discrete Fourier Transform (IDFT) processing, error correcting decoding, MAC retransmission control reception processing, and reception processing of an RLC layer and a PDCP layer on user data included in the input uplink signal, and transfers the user data to the higher station apparatus 30 via the communication path interface 106. The call processing section 105 performs call processing (such as configuration and release) of a communication channel, state management of the radio base station 10 and radio resource management.

The communication path interface 106 transmits and receives signals to and from the higher station apparatus 30 via a given interface. Furthermore, the communication path interface 106 may transmit and receive (backhaul signaling) signals to and from the another radio base station 10 via an inter-base station interface (e.g., optical fibers compliant with the Common Public Radio Interface (CPRI) or the X2 interface).

In addition, each transmitting/receiving section 103 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 101 can be composed of an array antenna, for example. Furthermore, each transmitting/receiving section 103 is configured to be able to apply single BF and multiple BF.

Furthermore, each transmitting/receiving section 103 transmits a Downlink (DL) signal (including at least one of a DL data signal (downlink shared channel), a DL control signal (downlink control channel) and a DL reference signal) to the user terminal 20, and receives an Uplink (UL) signal (including at least one of a UL data signal, a UL control signal and a UL reference signal) from the user terminal 20.

Furthermore, each transmitting/receiving section 103 transmits 1 or more downlink shared channels to which a candidate occasion is configured over a plurality of slots. For example, each transmitting/receiving section 103 only needs to transmit a PDSCH in at least one slot of a plurality of slots that become the candidate occasion. Each transmitting/receiving section 103 receives a transmission acknowledgement signal for a downlink shared channel generated based on at least one of a candidate occasion unit, a slot unit and a downlink shared channel transmission unit.

Furthermore, each transmitting/receiving section 103 may transmit the downlink shared channel such that downlink shared channels associated with different transport blocks do not overlap in 1 slot. Alternatively, when transmitting the downlink shared channels associated with the different transport blocks in the 1 slot, each transmitting/receiving section 103 may transmit the downlink shared channels such that the downlink shared channels associated with the different transport blocks do not overlap in an identical symbol.

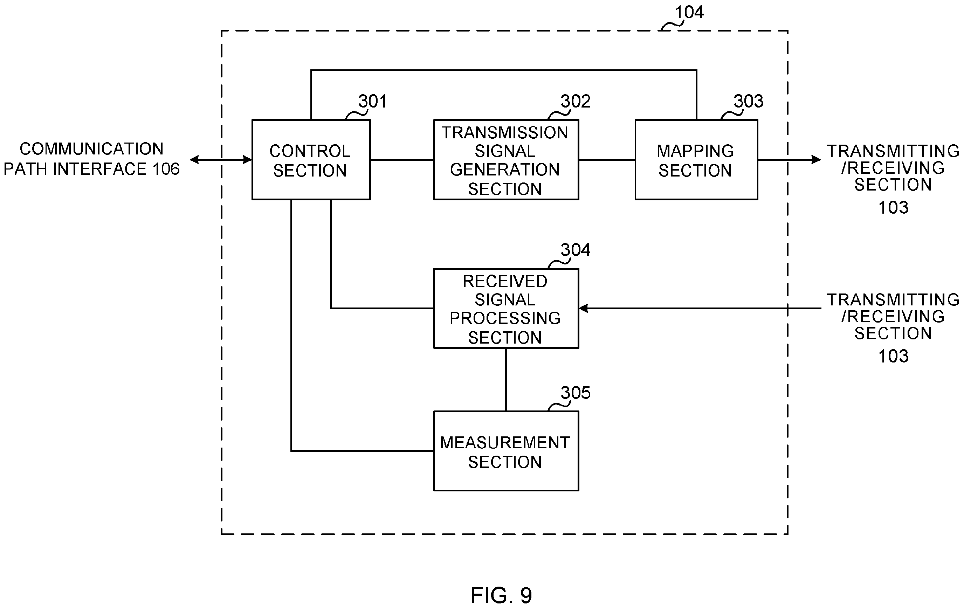

Fig. 9 is a diagram illustrating one example of a function configuration of the radio base station according to the present embodiment. In addition, this example mainly illustrates function blocks of characteristic portions according to the present embodiment, and assumes that the radio base station 10 includes other function blocks, too, that are necessary for radio communication.

The baseband signal processing section 104 includes at least a control section (scheduler) 301, a transmission signal generation section 302, a mapping section 303, a received signal processing section 304 and a measurement section 305. In addition, these components only need to be included in the radio base station 10, and part or all of the components may not be included in the baseband signal processing section 104.

The control section (scheduler) 301 controls the entire radio base station 10. The control section 301 can be composed of a controller, a control circuit or a control apparatus described based on the common knowledge in the technical field according to the present disclosure.

The control section 301 controls, for example, signal generation of the transmission signal generation section 302 and signal allocation of the mapping section 303. Furthermore, the control section 301 controls signal reception processing of the received signal processing section 304 and signal measurement of the measurement section 305.

The control section 301 controls scheduling (e.g., resource allocation) of system information, a downlink data signal (e.g., a signal that is transmitted on the PDSCH), and a downlink control signal (e.g., a signal that is transmitted on the PDCCH and/or the EPDCCH and is, for example, transmission acknowledgement information). Furthermore, the control section 301 controls generation of a downlink control signal and a downlink data signal based on a result obtained by deciding whether or not it is necessary to perform retransmission control on an uplink data signal.

The control section 301 may control scheduling of the downlink shared channels such that the downlink shared channels associated with the different transport blocks are not allocated to the 1 slot. Alternatively, when the downlink shared channels associated with the different transport blocks are allocated to the 1 slot, the control section 301 may control scheduling of the downlink shared channels such that the downlink shared channels associated with the different transport blocks do not overlap in an identical symbol. Furthermore, the control section 301 may switch and control whether or not to apply scheduling of the PDSCHs associated with the different TBs in the 1 slot per UE based on UE capability information.

The transmission signal generation section 302 generates a downlink signal (such as a downlink control signal, a downlink data signal or a downlink reference signal) based on an instruction from the control section 301, and outputs the downlink signal to the mapping section 303. The transmission signal generation section 302 can be composed of a signal generator, a signal generating circuit or a signal generating apparatus described based on the common knowledge in the technical field according to the present disclosure.

The transmission signal generation section 302 generates, for example, a DL assignment for giving notification of downlink data allocation information, and/or a UL grant for giving notification of uplink data allocation information based on the instruction from the control section 301. The DL assignment and the UL grant are both DCI, and conform to a DCI format. Furthermore, the transmission signal generation section 302 performs encoding processing and modulation processing on the downlink data signal according to a code rate and a modulation scheme determined based on Channel State Information (CSI) from each user terminal 20.

The mapping section 303 maps the downlink signal generated by the transmission signal generation section 302, on given radio resources based on the instruction from the control section 301, and outputs the downlink signal to each transmitting/receiving section 103. The mapping section 303 can be composed of a mapper, a mapping circuit or a mapping apparatus described based on the common knowledge in the technical field according to the present disclosure.

The received signal processing section 304 performs reception processing (e.g., demapping, demodulation and decoding) on a received signal input from each transmitting/receiving section 103. In this regard, the received signal is, for example, an uplink signal (such as an uplink control signal, an uplink data signal or an uplink reference signal) transmitted from the user terminal 20. The received signal processing section 304 can be composed of a signal processor, a signal processing circuit or a signal processing apparatus described based on the common knowledge in the technical field according to the present disclosure.

The received signal processing section 304 outputs information decoded by the reception processing to the control section 301. When, for example, receiving the PUCCH including HARQ-ACK, the received signal processing section 304 outputs the HARQ-ACK to the control section 301. Furthermore, the received signal processing section 304 outputs the received signal and/or the signal after the reception processing to the measurement section 305.

The measurement section 305 performs measurement related to the received signal. The measurement section 305 can be composed of a measurement instrument, a measurement circuit or a measurement apparatus described based on the common knowledge in the technical field according to the present disclosure.

For example, the measurement section 305 may perform Radio Resource Management (RRM) measurement or Channel State Information (CSI) measurement based on the received signal. The measurement section 305 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 305 may output a measurement result to the control section 301.

### <User Terminal>

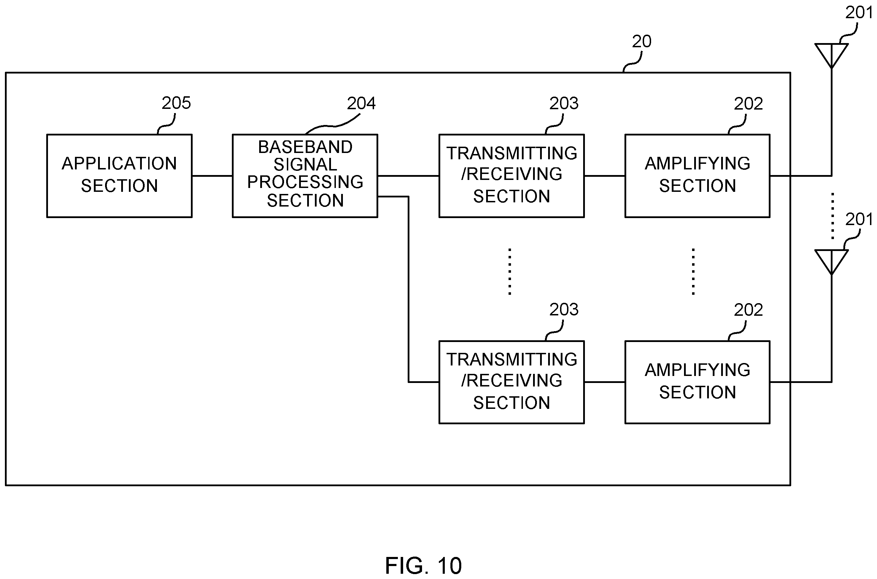

Fig. 10 is a diagram illustrating one example of an overall configuration of the user terminal according to the present embodiment. The user terminal 20 includes pluralities of transmission/reception antennas 201, amplifying sections 202 and transmitting/receiving sections 203, a baseband signal processing section 204 and an application section 205. In this regard, the user terminal 20 only needs to be configured to include one or more of each of the transmission/reception antennas 201, the amplifying sections 202 and the transmitting/receiving sections 203.

Each amplifying section 202 amplifies a radio frequency signal received at each transmission/reception antenna 201. Each transmitting/receiving section 203 receives a downlink signal amplified by each amplifying section 202. Each transmitting/receiving section 203 performs frequency conversion on the received signal into a baseband signal, and outputs the baseband signal to the baseband signal processing section 204. The transmitting/receiving sections 203 can be composed of transmitters/receivers, transmission/reception circuits or transmission/reception apparatuses described based on the common knowledge in the technical field according to the present disclosure. In this regard, the transmitting/receiving sections 203 may be composed as an integrated transmission/reception section or may be composed of transmission sections and reception sections.

The baseband signal processing section 204 performs FFT processing, error correcting decoding and retransmission control reception processing on the input baseband signal. The baseband signal processing section 204 transfers downlink user data to the application section 205. The application section 205 performs processing related to layers higher than a physical layer and an MAC layer. Furthermore, the baseband signal processing section 204 may transfer broadcast information of the downlink data, too, to the application section 205.

On the other hand, the application section 205 inputs uplink user data to the baseband signal processing section 204. The baseband signal processing section 204 performs retransmission control transmission processing (e.g., HARQ transmission processing), channel coding, precoding, Discrete Fourier Transform (DFT) processing and IFFT processing on the uplink user data, and transfers the uplink user data to each transmitting/receiving section 203.

Each transmitting/receiving section 203 converts the baseband signal output from the baseband signal processing section 204 into a radio frequency range, and transmits a radio frequency signal. The radio frequency signal subjected to the frequency conversion by each transmitting/receiving section 203 is amplified by each amplifying section 202, and is transmitted from each transmission/reception antenna 201.

In addition, each transmitting/receiving section 203 may further include an analog beam forming section that performs analog beam forming. The analog beam forming section can be composed of an analog beam forming circuit (e.g., a phase shifter or a phase shift circuit) or an analog beam forming apparatus (e.g., a phase shifter) described based on the common knowledge in the technical field according to the present invention. Furthermore, each transmission/reception antenna 201 can be composed of an array antenna, for example. Furthermore, each transmitting/receiving section 203 is configured to be able to apply single BF and multiple BF.

Furthermore, each transmitting/receiving section 203 receives the Downlink (DL) signal (including at least one of the DL data signal (downlink shared channel), the DL control signal (downlink control channel) and the DL reference signal) from the radio base station 10, and transmits the Uplink (UL) signal (including at least one of the UL data signal, the UL control signal and the UL reference signal) to the radio base station 10.

Furthermore, each transmitting/receiving section 203 receives the 1 or more downlink shared channels to which the candidate occasions are configured over a plurality of slots. For example, each transmitting/receiving section 203 may monitor a plurality of slots that become the candidate occasions, and receive a PDSCH in at least one slot. Each transmitting/receiving section 203 transmits a transmission acknowledgement signal for the downlink shared channels generated based on at least one of the candidate occasion unit, the slot unit and the downlink shared channel transmission unit.

Furthermore, each transmitting/receiving section 203 may receive the downlink shared channel assuming that the downlink shared channels associated with the different transport blocks do not overlap in the 1 slot. Alternatively, when receiving the downlink shared channels associated with the different transport blocks in the 1 slot, each transmitting/receiving section 203 may receive the downlink shared channels assuming that the downlink shared channels associated with the different transport blocks do not overlap in the identical symbol.

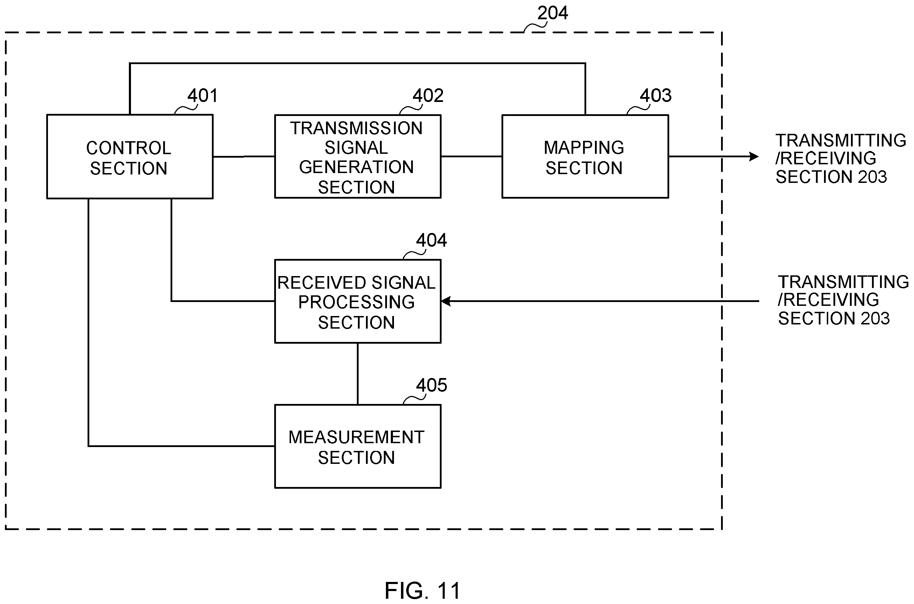

Fig. 11 is a diagram illustrating one example of a function configuration of the user terminal according to the present embodiment. In addition, this example mainly illustrates function blocks of characteristic portions according to the present embodiment, and assumes that the user terminal 20 includes other function blocks, too, that are necessary for radio communication.

The baseband signal processing section 204 of the user terminal 20 includes at least a control section 401, a transmission signal generation section 402, a mapping section 403, a received signal processing section 404 and a measurement section 405. In addition, these components only need to be included in the user terminal 20, and part or all of the components may not be included in the baseband signal processing section 204.

The control section 401 controls the entire user terminal 20. The control section 401 can be composed of a controller, a control circuit or a control apparatus described based on the common knowledge in the technical field according to the present disclosure.

The control section 401 controls, for example, signal generation of the transmission signal generation section 402 and signal allocation of the mapping section 403. Furthermore, the control section 401 controls signal reception processing of the received signal processing section 404 and signal measurement of the measurement section 405.

The control section 401 obtains from the received signal processing section 404 a downlink control signal and a downlink data signal transmitted from the radio base station 10. The control section 401 controls generation of an uplink control signal and/or an uplink data signal based on a result obtained by deciding whether or not it is necessary to perform retransmission control on the downlink control signal and/or the downlink data signal.

The control section 401 controls generation (or transmission) of the transmission acknowledgement signals for the downlink shared channels based on at least one of the candidate occasion unit, the slot unit and the downlink shared channel transmission unit. When, for example, candidate occasions of the downlink shared channels associated with the different transport blocks overlap, the control section 401 may assume that the downlink shared channels associated with the different transport blocks are not received in the identical slot.

Alternatively, when the candidate occasions of the downlink shared channels associated with the different transport blocks overlap, the control section 401 may assume that the downlink shared channels associated with the different transport blocks are received in the identical slot. In this case, the control section 401 may assume that the downlink shared channels associated with the different transport blocks are not received in an identical symbol in an identical slot.

Furthermore, the control section 401 may control generation of codebooks of the transmission acknowledgement signals based on at least one of the candidate occasion unit, the slot unit and the downlink shared channel transmission unit.

The transmission signal generation section 402 generates an uplink signal (such as an uplink control signal, an uplink data signal or an uplink reference signal) based on an instruction from the control section 401, and outputs the uplink signal to the mapping section 403. The transmission signal generation section 402 can be composed of a signal generator, a signal generating circuit or a signal generating apparatus described based on the common knowledge in the technical field according to the present disclosure.

The transmission signal generation section 402 generates, for example, an uplink control signal related to transmission acknowledgement information and Channel State Information (CSI) based on the instruction from the control section 401. Furthermore, the transmission signal generation section 402 generates an uplink data signal based on the instruction from the control section 401. When, for example, the downlink control signal notified from the radio base station 10 includes a UL grant, the transmission signal generation section 402 is instructed by the control section 401 to generate an uplink data signal.

The mapping section 403 maps the uplink signal generated by the transmission signal generation section 402, on radio resources based on the instruction from the control section 401, and outputs the uplink signal to each transmitting/receiving section 203. The mapping section 403 can be composed of a mapper, a mapping circuit or a mapping apparatus described based on the common knowledge in the technical field according to the present disclosure.

The received signal processing section 404 performs reception processing (e.g., demapping, demodulation and decoding) on the received signal input from each transmitting/receiving section 203. In this regard, the received signal is, for example, a downlink signal (such as a downlink control signal, a downlink data signal or a downlink reference signal) transmitted from the radio base station 10. The received signal processing section 404 can be composed of a signal processor, a signal processing circuit or a signal processing apparatus described based on the common knowledge in the technical field according to the present disclosure. Furthermore, the received signal processing section 404 can compose the reception section according to the present disclosure.

The received signal processing section 404 outputs information decoded by the reception processing to the control section 401. The received signal processing section 404 outputs, for example, broadcast information, system information, an RRC signaling and DCI to the control section 401. Furthermore, the received signal processing section 404 outputs the received signal and/or the signal after the reception processing to the measurement section 405.

The measurement section 405 performs measurement related to the received signal. The measurement section 405 can be composed of a measurement instrument, a measurement circuit or a measurement apparatus described based on the common knowledge in the technical field according to the present disclosure.

For example, the measurement section 405 may perform RRM measurement or CSI measurement based on the received signal. The measurement section 405 may measure received power (e.g., RSRP), received quality (e.g., RSRQ, an SINR or an SNR), a signal strength (e.g., RSSI) or channel information (e.g., CSI). The measurement section 405 may output a measurement result to the control section 401.

### (Hardware Configuration)

In addition, the block diagrams used to describe the above embodiment illustrate blocks in function units. These function blocks (components) are realized by an arbitrary combination of at least one of hardware and software. Furthermore, a method for realizing each function block is not limited in particular. That is, each function block may be realized by using one physically or logically coupled apparatus or may be realized by using a plurality of these apparatuses formed by connecting two or more physically or logically separate apparatuses directly or indirectly (by using, for example, wired connection or radio connection). Each function block may be realized by combining software with the above one apparatus or a plurality of above apparatuses.

In this regard, the functions include judging, determining, deciding, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

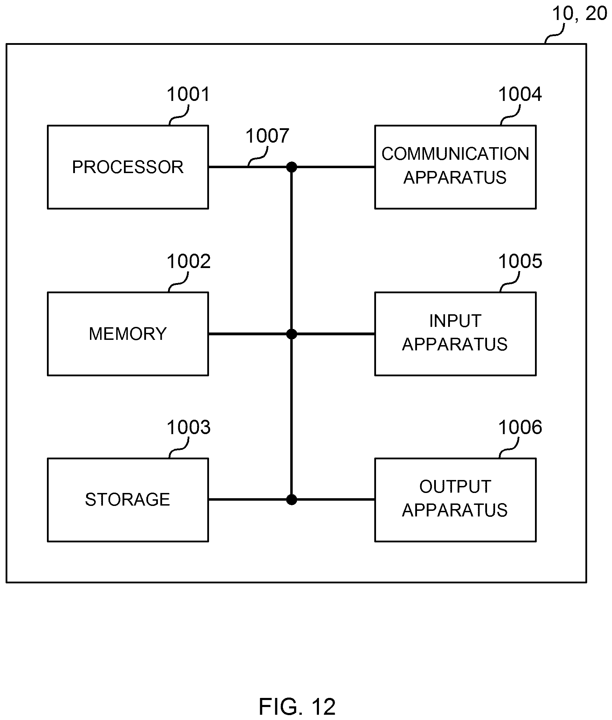

For example, the base station and the user terminal according to the one embodiment of the present disclosure may function as computers that perform processing of the radio communication method according to the present disclosure. Fig. 12 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, a word "apparatus" in the following description can be read as a circuit, a device or a unit. The hardware configurations of the base station 10 and the user terminal 20 may be configured to include one or a plurality of apparatuses illustrated in Fig. 12 or may be configured without including part of the apparatuses.

For example, Fig. 12 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, the above-described baseband signal processing section 104 (204) and call processing section 105 may be realized by the processor 1001.

Furthermore, the processor 1001 reads programs (program codes), a software module or data from at least one of the storage 1003 and the communication apparatus 1004 out to the memory 1002, and executes various types of processing according to these programs, software module or data. As the programs, programs that cause the computer to execute at least part of the operations described in the above-described embodiment are used. For example, the control section 401 of the user terminal 20 may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and a software module that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception antennas 101 (201), amplifying sections 102 (202), transmitting/receiving sections 103 (203) and communication path interface 106 may be realized by the communication apparatus 1004. Each transmitting/receiving section 103 may be physically or logically separately implemented as a transmitting section 103a and a receiving section 103b.

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these types of hardware.

### (Modified Example)

In addition, each term that has been described in the present disclosure and each term that is necessary to understand the present disclosure may be replaced with terms having identical or similar meanings. For example, at least one of a channel and a symbol may be a signal (signaling). Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that composes a radio frame may be referred to as a subframe. Furthermore, the subframe may include one or a plurality of slots in the time domain. The subframe may be a fixed time duration (e.g., 1 ms) that does not depend on the numerologies.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier-Frequency Division Multiple Access (SC-FDMA) symbols) in the time domain. Furthermore, the slot may be a time unit based on the numerologies.

The slot may include a plurality of mini slots. Each mini slot may include one or a plurality of symbols in the time domain. Furthermore, the mini slot may be referred to as a subslot. The mini slot may include a smaller number of symbols than those of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a Transmission Time Interval (TTI), a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that compose a minimum time unit of the scheduling may be controlled.

The TTI having the time duration of 1 ms may be referred to as a general TTI (TTIs according to LTE Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that a given signal/channel is transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (the Physical Uplink Control Channel (PUCCH) and the Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified by a physical layer signaling (e.g., Downlink Control Information (DCI) and Uplink Control Information (UCI)), a higher layer signaling (e.g., a Radio Resource Control (RRC) signaling, broadcast information (a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (LI control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used.

In the present disclosure, terms such as "precoding", a "precoder", a "weight (precoding weight)", "Quasi-Co-Location (QCL)", "transmission power", "phase rotation", an "antenna port", an "antenna port group", a "layer", "the number of layers", a "rank", a "beam", a "beam width", a "beam angle", an "antenna", an "antenna element" and a panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New Radio Access Technology (New-RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are expanded based on these systems. Furthermore, a plurality of systems may be combined (e.g., a combination of LTE or LTE-A and 5G) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be regarded to "decide (determine)" judging, calculating, computing, processing, deriving, investigating, looking up, search and inquiry (e.g., looking up in a table, a database or another data structure), and ascertaining.

Furthermore, "deciding (determining)" may be regarded to "decide (determine)" receiving (e.g., receiving information), transmitting (e.g., transmitting information), input, output and accessing (e.g., accessing data in a memory).

Furthermore, "deciding (determining)" may be regarded to "decide (determine)" resolving, selecting, choosing, establishing and comparing. That is, "deciding (determining)" may be regarded to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends not to be an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A user terminal comprising:
a reception section that receives 1 or more downlink shared channels to which candidate occasions are configured over a plurality of slots; and
a control section that controls generation of transmission acknowledgement signals for the downlink shared channels based on at least one of a candidate occasion unit, a slot unit and a downlink shared channel transmission unit.

2. The user terminal according to claim 1, wherein, when the candidate occasions of the downlink shared channels associated with different transport blocks overlap, the control section assumes that the downlink shared channels associated with the different transport blocks are not received in an identical slot.

3. The user terminal according to claim 1, wherein, when the candidate occasions of the downlink shared channels associated with different transport blocks overlap, the control section assumes that the downlink shared channels associated with the different transport blocks are received in an identical slot.

4. The user terminal according to claim 3, wherein the control section assumes that the downlink shared channels associated with the different transport blocks are not received in an identical symbol in the identical slot.

5. The user terminal according to any one of claims 1 to 4, wherein the control section generates codebooks of the transmission acknowledgement signals based on at least one of the candidate occasion unit, the slot unit and the downlink shared channel transmission unit.

6. A radio communication method comprising:
receiving 1 or more downlink shared channels to which candidate occasions are configured over a plurality of slots; and
controlling generation of transmission acknowledgement signals for the downlink shared channels based on at least one of a candidate occasion unit, a slot unit and a downlink shared channel transmission unit.
